# FASCICULE DE BREVET EUROPEEN

(11) **EP 0 617 826 B1**
(45) Date de publication et mention de la délivrance du brevet: **10.04.1996**
(21) Numéro de dépôt: 92924695.7
(22) Date de dépôt: 07.12.1992
(51) Int. Cl.: G09F 3/03, G08B 13/24, E05B 73/00

(54) **DISPOSITIF DE SCELLEMENT DE SECURITE**
SICHERHEITSVERSCHLIESSVORRICHTUNG
SECURITY SEALING DEVICE

(30) Priorité: 19.12.1991 CH 3785/91
(43) Date de publication de la demande: 05.10.1994
(73) Titulaire: GUSTAFSON, Ake, CH-1618 Châtel-St-Denis (CH)
(72) Inventeur: GUSTAFSON, Ake, CH-1618 Châtel-St-Denis (CH)
(74) Mandataire: Fischer, Franz Josef
(86) Numéro de dépôt international: EP9202841
(87) Numéro de publication internationale: WO9312513

(56) Documents cités:
- EP-A- 0 177 394
- EP-A- 0 283 084
- EP-A- 0 377 257
- FR-A- 2 658 166
- US-A- 4 751 500

## Description

La présente invention concerne un dispositif de scellement de sécurité pouvant être utilisé pour de nombreuses applications, l'intégrité de ce dispositif de scellement pouvant être contrôlée par des moyens électroniques, de préférence automatiques, fixes ou portatifs.

En de nombreuses occasions il est nécessaire de pouvoir assurer que le contenu d'un récipient quelconque n'a pas été frauduleusement modifié durant une période d'entreposage ou durant un transport par exemple, respectivement depuis le moment où le scellement a été apposé sur le récipient.

Le terme récipient utilisé ici est de portée très générale, il peut s'agir tout aussi bien d'un immeuble dont la porte et les fenêtres ont été scellées, qu'un appareil de mesure dont le réglage doit être préservé ou d'une boîte dont le contenu ne doit pas être altéré, etc. De même par scellement, il n'est pas absolument nécessaire que le récipient en question ne puisse être ouvert, il peut aussi s'agir d'une opération de marquage d'un objet, par exemple une valise lors d'un voyage, ledit marquage devant rester attaché à l'objet sans possibilité d'en être retiré échangé ou altéré avant la fin dudit voyage, respectivement avant l'accomplissement d'une opération de contrôle.

Pour assurer ceci, on dispose généralement un scellé sur le récipient ou l'objet en question, ce scellé étant généralement constitué d'une pièce ou d'une bande de papier, de carton, de tissu, de plastique ou de métal mince, dont une portion est fixée sur une première partie du récipient alors qu'une autre portion est fixée sur une seconde partie du récipient, l'ouverture du récipient, respectivement la séparation des deux parties ou l'ouverture du scellé ne pouvant avoir lieu qu'avec une déchirure de la bande de scellement; la pièce ou la bande de scellement a généralement une forme et des dimensions adaptées au type de récipient à sceller. Un dispositif de scellement de ce type, prévu pour le scellement d'une bouteille, est décrit par exemple dans FR-A-2.658.166.

Un autre dispositif de l'art antérieur est constitué d'un fil formant une boucle afin d'empêcher l'ouverture d'un récipient, respectivement de pouvoir être retiré de l'objet auquel il est fixé, deux brins du fil refermant la boucle étant assemblés par un cachet de cire ou de plomb.

De tels dispositifs de scellement selon l'art antérieur comportent l'inconvénient principal de pouvoir être relativement facilement violés; il est généralement possible de les frauder en prenant le temps et/ou les précautions nécessaires pour soigneusement détacher ou décoller l'une des portions du dispositif et à la replacer après avoir vidé ou échangé le contenu du récipient. Dans le cas d'un simple marquage, il est possible, de la même manière, de modifier ou d'échanger ledit marquage. De plus, un contrôle de l'intégrité du scellement ne peut se faire que pièce par pièce, par un examen visuel de chaque scellement, ce qui est long et coûteux.

Un dispositif de scellement pouvant être contrôlé électroniquement est décrit dans US-A-4.751.500. Ce dispositif est spécialement adapté afin de contrôler la circulation de marchandises dans un local de vente afin d'en éviter le vol. Il est prévu pour être utilisé dans un local dont les accès sont équipés de moyens de contrôle électroniques. Un dispositif de scellement est disposé sur chaque pièce de produit à vendre, le descellement du produit ne pouvant de faire que par des moyens ou un outil spécial qui ne détruit pas le dispositif de scellement. Le dispositif décrit ici ne peut être utilisé que dans un local déterminé.

Un autre dispositif de scellement à contrôle électronique est décrit dans EP-A-0 177 394. Dans ce cas, le sceau est composé d'une cavité ultrasonore reliée à un transducteur récepteur et à un autre transducteur émetteur. Ces transducteurs sont reliés électriquement à une sonde assurant les connexions aux circuits de contrôle. Le descellement du sceau provoque une déformation ou une destruction de la cavité ultrasonore modifiant de ce fait sa réponse à une excitation donnée. L'inconvénient de ce dispositif est qu'il est nécessaire de relier électriquement chaque sceau au dispositif de contrôle afin d'exciter le sceau et d'en contrôler la réponse.

EP-A-0 377 257 décrit un dispositif d'identification d'objets portant un sceau muni d'un code. Le code peut être lu à distance par voie électro-magnétique. Il n'est pas prévu que le code puisse être modifié par destruction du sceau.

La demande EP-A-0 283 084 décrit un dispositif qui peut être considéré comme l'art antérieur le plus proche de celui de l'invention. Ce dispositif est constitué de deux pièces mécaniques, réunies pour le scellement, et dont une séparation entraîne une rupture d'un circuit électronique. Un tel dispositif possède les inconvénients de devoir disposer des deux pièces ainsi que de devoir percer, ou de pouvoir bénéficier d'un trou, de dimensions appropriées tant en diamètre qu'en longueur. De plus après usage, un tel dispositif laisse une trace indélébile, un trou, dans l'objet protégé.

Un premier but de l'invention est de proposer un dispositif de scellement ne comportant pas le principal inconvénient de ceux de l'art antérieur, soit un dispositif de scellement dont l'intégrité puisse être contrôlée à distance par des moyens électroniques, de préférence automatiques, fixes ou portables.

Un autre but de l'invention est de proposer un dispositif dont une tentative de fraude puisse être détectée avec sûreté.

Un autre but de l'invention est de proposer un dispositif de scellement pouvant être utilisé durant une très longue période sans que ses caractéristiques ne se modifient.

Afin d'atteindre ces différents buts, l'objet de l'invention est un dispositif de scellement de sécurité conforme aux revendications.

Le dessin en annexe comportant plusieurs figures permet, à l'aide de la description qui suit, de mieux comprendre l'invention et ses applications.
La figure 1 montre une forme d'exécution d'un dispositif de scellement selon l'invention avant installation,
la figure 2 montre le même dispositif installé pour protéger l'ouverture d'un récipient ou pour marquer un objet.
Les figures 3A, 3B et 3C montrent une autre forme d'exécution d'un dispositif de scellement selon l'invention vu selon trois directions perpendiculaires, monté sur un goulot d'une bouteille, et
les figures 4A, 4B et 4C montrent différentes formes d'exécution d'un circuit de sécurité faisant partie d'un dispositif de scellement selon l'invention.

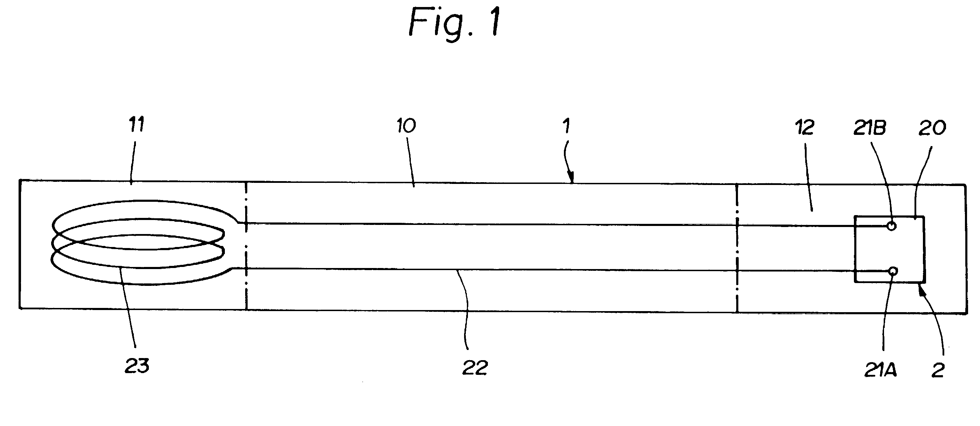

A la figure 1 on a une bande de scellement 1 faisant office de support, constituée d'une feuille de papier, de carton, de tissu ou de plastique et comprenant trois zones, deux zones de collage 11 et 12 et une zone intermédiaire 10, pouvant aussi dans certains cas être une zone de collage, dont les fonctions seront expliquées plus loin. Sur une face de cette bande de scellement 1, est fixé par collage un circuit de sécurité 2 composé d'une pastille 20 constituée de préférence d'un composant électronique codable ou comportant un tel composant, et comportant en particulier deux pistes de soudage 21A et 21B reliées par les fils de connexion 22 à une bobine plate 23 comprenant une pluralité de spires d'un fil conducteur isolé. L'ensemble du circuit de sécurité 2 est disposé sur une face de la bande de scellement 1, la bobine 23 étant collée de préférence sur la face correspondant à la zone de collage 11 alors que la pastille 20 est collée sur l'autre zone de collage 12, la zone intermédiaire 10 comportant les fils de connexion 22 qui y sont aussi collés.

Le circuit électronique de sécurité 2 est passif, c'est-à-dire qu'il ne comporte aucune source d'énergie, ce qui fait que son fonctionnement et ses caractéristiques ne sont pas tributaires de la décharge d'une pile; les caractéristiques du circuit 2 seront donc constantes au cours du temps, permettant une utilisation de très longue durée.

Comme il a été dit précédemment, le composant électronique disposé sur la pastille 20 ou constituant ladite pastille est codable, selon une technique connue, c'est-à-dire qu'il s'agit d'un composant intégré dont les éléments sont disposés de telle manière qu'un code, par exemple numérique, peut être programmé, et que lorsque le composant est interrogé par un appareil émetteur-récepteur auxiliaire, il réponde à ce code et uniquement à celui-ci. L'opération de programmation du code se fait généralement en usine, ou alors ultérieurement par l'utilisateur à l'aide de l'appareillage adéquat. Après que le code ait été programmé, le code est de préférence verrouillé, c'est-à-dire que une ou plusieurs portions du composant électronique sont détruites, par exemple par un dispositif à laser, afin que le code ne puisse plus être modifié ultérieurement. Lors du contrôle de l'intégrité du circuit 2, respectivement de l'intégrité du scellement, par un appareil émetteur-récepteur de contrôle, le bobinage de fil fin 23 fait office d'antenne par laquelle le composant électronique 20 est activé, interrogé et par laquelle il répond à son code. Le contrôle de l'intégrité du scellement peut donc se faire sans que l'appareil de contrôle n'entre en contact direct avec une quelconque partie du dispositif de scellement.

Afin que les figures soient compréhensibles, les éléments composant le circuit de sécurité 2 ont été agrandis relativement aux dimensions de la bande de scellement 1, de même que le nombre de spires du bobinage 23 a été fortement réduit; la pastille 20 comportant les deux pistes conductrices 21A et 21B pourra avoir typiquement une dimension de l'ordre de 1 mm de côté, alors que le diamètre du fil isolé par laquage constituant la bobine 23 et les fils de connexion 22 pourra typiquement être de l'ordre de 2 à 5 centièmes de mm et que la bobine pourra comporter quelques centaines de spires.

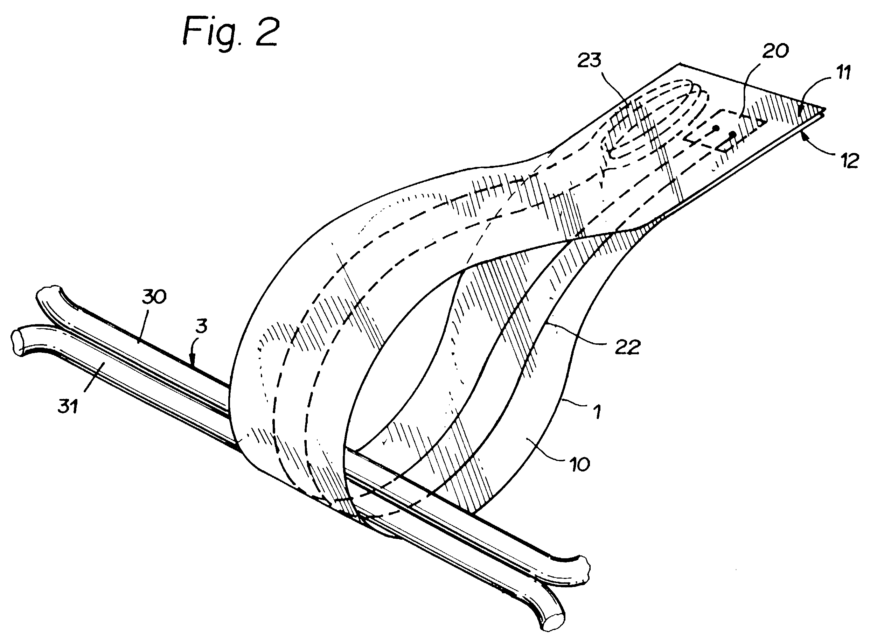

L'utilisation du dispositif de scellement ci-dessus est représentée à la figure 2 où on voit que la bande de scellement 1 entoure deux portions 30 et 31 d'un dispositif de fermeture 3 d'un récipient non représenté sur la figure. La bande de scellement 1 est chargée d'assurer que les deux portions 30 et 31 n'ont pas été écartées, respectivement que le récipient n'a pas été ouvert, depuis le moment où la bande de scellement 1 a été posée. Pour ceci, la bande de scellement 1 entoure les deux portions 30 et 31 de manière à former une boucle fermée par collage de la zone de collage 11 sur l'autre zone de collage 12. Vu que la zone intermédiaire 10 formant la boucle entourant les deux portions 30 et 31 est parcourue par les fils de liaison 22, une ouverture de la boucle, respectivement un déchirement de la bande de scellement 1, provoque à coup sur un arrachage desdits fils de liaison 22, interrompant de ce fait la continuité du circuit de sécurité 2. De préférence le dispositif comprendra des moyens de collage différenciés tels que si, dans le désir de frauder le scellement, quelqu'un essaie de décoller les deux zones de collage 11 et 12 fermant la boucle, au-moins un des éléments constituant le circuit de sécurité reste collé à une partie du support ou plus généralement d'une partie de l'objet sur lequel il est fixé, alors qu'au-moins un des autres éléments constituant le circuit de sécurité reste collé à une autre partie du support ou plus généralement d'une autre partie de l'objet sur lequel il est fixé. Dans le cas représenté, la pastille 20 est par exemple collée sur la zone de collage 12 avec une adhérence relativement faible, alors que la zone 11 comportant le bobinage 23 et venant se plaquer sur la zone 12 est munie d'une colle ayant une adhérence relativement élevée, plus élevée que celle faisant adhérer la pastille 20 à la zone 12, de telle façon que la pastille 20 adhère plus fortement contre la zone 11 que contre la zone 12 lorsque les deux zones sont assemblées. De cette manière, en écartant les deux zones 11 et 12, même avec beaucoup de soin, la pastille 20 ainsi que la bobine 23 restent collées à la zone 11, alors que les fils de liaison 22 restent collés à la zone intermédiaire 10 et se rompent inévitablement lors de l'écartement des zones 11 et 12; de cette manière la continuité du circuit de sécurité 2 est aussi interrompue.

Pour une meilleure compréhension de la figure 2, le composant électronique 20 et la bobine 23 ont été représentés l'un à côté de l'autre, mais il est tout aussi possible que ces deux éléments soient superposés lors du collage de la zone 11 sur la zone 12.

Lorsque la continuité du circuit de sécurité 2 est interrompue, le composant électronique 20 ne peut plus être interrogé vu que sa connexion à la bobine 23 faisant office d'antenne est interrompue; il ne réagit donc plus lorsqu'il est interrogé de la manière décrite précédemment. Vu les dimensions extrêmement réduites des composants du circuit de sécurité 2, il est quasi impossible de rétablir la continuité du circuit, par exemple en essayant de reconnecter deux fils arrachés afin d'essayer de reconstituer le circuit. Ainsi, une ouverture du circuit de sécurité permet de détecter sûrement un scellement qui aurait été violé, lorsqu'en interrogeant ce scellement on ne reçoit aucun signal codé en retour.

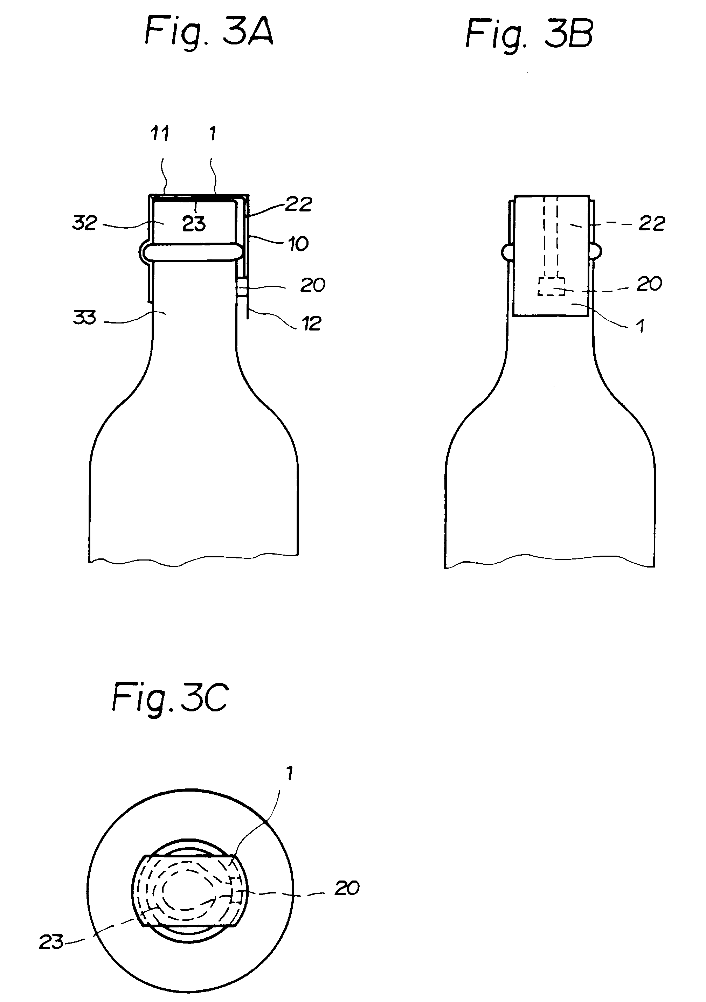

Une autre forme d'exécution du dispositif de scellement selon l'invention est visible sur les figures 3A, 3B et 3C où il est représenté appliqué au scellement d'une bouteille.

Dans ce cas, la bande de scellement 1 doit assurer que le bouchon 32 n'ait pas été retiré du goulot 33 pour que la qualité du produit contenu dans la bouteille soit garantie. La bande de scellement 1 est similaire à celle décrite plus haut, si ce n'est que sa forme et ses dimensions ont été adaptées à l'emploi prévu. Dans ce cas, il est seulement nécessaire que au-moins un des composants du circuit de sécurité soit collé fortement au bouchon 32 et au goulot 33, par exemple, l'extrémité collante 11 de la bande 1 comportant la bobine 23 est collée fortement par dessus la face supérieure du bouchon 32, alors que la pastille 20 est collée fortement contre la face latérale du goulot 33, ou alors ce peut être la portion centrale 10 comportant les fils de liaison 22 qui est collée fortement aussi bien au bouchon 32 qu'au goulot 33. Ainsi toute tentative d'arrachage ou de décollement de la bande de scellement 1 entraîne la rupture de la continuité du circuit de sécurité 2 signalant de ce fait que la qualité du liquide contenu dans la bouteille ne peut plus être garantie.

On voit donc que le dispositif de scellement peut être adapté à toutes sortes de fermetures et que la forme et les dimensions de la bande de scellement 1 et par conséquent celles de la bobine 23 ainsi que sa position sur la bande de scellement peuvent être adaptées aux besoins. De même les positions relatives des zones collantes 11 et 12 ainsi que de la zone intermédiaire peuvent être adaptées aux besoins, il n'est pas obligatoire que la zone intermédiaire 10 soit située entre les zones collantes 11 et 12.

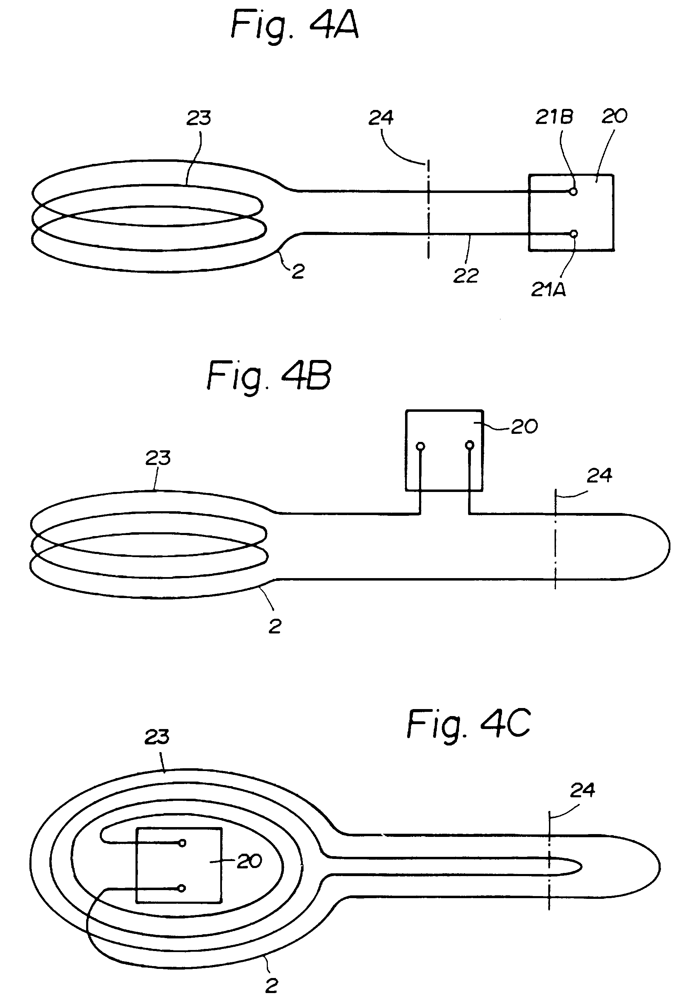

Les figures 4A, 4B et 4C montrent, parmi bien d'autres, trois formes d'exécution possibles du circuit de sécurité 2, les lignes 24 représentant les endroits prévus pour une interruption du circuit de sécurité, respectivement des fils de liaison en cas d'arrachage, des amorces de rupture sur des portions du fil pouvant être disposées à ces endroits, correspondant de préférence à la zone intermédiaire 10. De préférence la bobine 23 sera disposée sur une portion de la bande de scellement 1 restant relativement plate lorsque ladite bande est apposée sur l'objet à sceller, afin que ses caractéristiques de transmission ne soient pas modifiées par une déformation de ladite bobine; les endroits prévus pour l'arrachage du scellement seront parcourus par un ou deux des fils de liaison afin qu'un arrachage interrompe sûrement la continuité du circuit de sécurité 2. Il est aussi possible, afin de diminuer encore le risque de pouvoir rétablir la continuité du circuit de sécurité après descellement, qu'une ou plusieurs des spires composant la bobine 23 se prolongent et passent par les endroits prévus pour la rupture du circuit de sécurité, comme représenté à la figure 4C, ce qui augmente le nombre de fils à devoir éventuellement reconnecter.

Afin d'assurer avec sécurité un arrachage des fils de liaison 22 et une interruption de continuité du circuit de sécurité 2 en cas de tentative de fraude du scellement, le dispositif selon l'invention comprend des moyens de collage différenciés tels que, si lors de la fabrication du dispositif, le composant 20, les fils de liaison 22 et la bobine 23 sont collés chacun sur une partie (10,11,12) du support 1, après que le scellement ait été posé sur le récipient à protéger, l'adhésion de un ou de deux des trois éléments constituant le circuit de sécurité 2 adhère plus fortement à la partie de support ou du récipient sur laquelle il a été appliqué que sur la partie du support sur laquelle il était fixé d'origine. En d'autres termes, après scellement on a au-moins un élément du circuit qui adhère fortement à la portion du support sur laquelle il était fixé d'origine et au-moins un autre élément qui adhère fortement à la partie de support ou du récipient sur laquelle il a été fixé lors du scellement. Le choix des éléments munis de moyens différenciés de collage est fait selon l'usage désiré et la configuration de la bande de scellement. Ainsi, de quelque manière que l'on recherche à ouvrir le récipient ou à retirer tout ou partie de la bande de scellement, au-moins un élément y restera attaché alors qu'au-moins un autre élément restera attaché à au-moins une partie du récipient à protéger.

Le code introduit de la manière décrite plus haut peut correspondre par exemple au contenu du récipient, à une date de mise en stockage ou à la destination du produit.

Comme il a été dit plus haut, tout ce qui a été décrit ici peut aussi s'appliquer à un simple marquage d'un objet quelconque, la bande de scellement 1 étant simplement apposée contre l'objet ou formée en boucle dans une boucle ou un logement adéquat de l'objet; le codage pouvant alors servir à indiquer la nature de l'objet ou sa destination par exemple. De manière similaire à ce qui a été décrit pour le scellement d'un récipient, le marquage d'un objet par un dispositif selon l'invention permet d'assurer qu'il n'y a pas eu échange d'objets; un système de contrôle utilisant des dispositifs de marquage selon l'invention peut être avantageusement utilisé par exemple pour surveiller les flux de bagages à l'intérieur d'un aéroport. De manière plus générale, un récipient scellé par un dispositif selon l'invention peut aussi être considéré comme étant marqué, dans le sens indiqué ci-dessus.

Selon l'usage auquel est destiné le support du dispositif de scellement sera en papier, en carton ou en plastique, la forme, les dimensions dudit support, ainsi que la disposition de la pastille 20 et du bobinage 23 étant choisies afin d'assurer l'intégrité du scellement selon le mode d'ouverture du récipient en question. Au cas où une portion du circuit électronique de sécurité pourrait entrer en contact avec une portion métallique du récipient ou de l'objet, une couche protectrice isolante peut facilement être disposée sur cette portion ou sur l'ensemble du circuit.

Le dispositif de scellement selon l'invention, utilisé comme scellement ou comme marquage peut donc facilement être contrôlé par des moyens automatiques, par exemple en approchant un dispositif émetteur-récepteur dudit dispositif de scellement et en contrôlant que ledit circuit réponde bien au code prévu. A côté de cette fonction de contrôle de l'intégrité du scellement, on peut facilement adjoindre un dispositif de comptage au dispositif de contrôle afin d'obtenir un état de stock par produit, si chaque produit répond à un code déterminé.

Le dispositif de scellement de sécurité selon l'invention comporte de nombreux avantages, il peut donc assurer avec sécurité que le scellement en question n'a pas été violé, ceci par des moyens électroniques pouvant être fixes ou portables et de préférence automatiques, ce qui augmente fortement la rapidité et la fiabilité du contrôle et par conséquent en diminue d'autant les coûts. De plus, un codage du dispositif est possible selon la nécessité. Vu les faibles dimensions de la pastille et du fil constituant le bobinage, le circuit de sécurité est quasiment invisible, un dispositif de scellement muni d'un tel circuit ne pouvant pas être distingué d'un autre dispositif de scellement non muni d'un circuit de sécurité. A côté des possibilités prévues de contrôle du scellement, le même circuit de sécurité peut permettre un comptage des pièces en stock.

## Revendications

1. Dispositif de scellement de sécurité destiné à être appliqué à un objet à sceller ou à marquer, constitué d'un support (1) sur lequel est disposé un circuit électronique de sécurité (2) par lequel l'intégrité du scellement peut être contrôlée par des moyens électroniques par voie électromagnétique, le descellement dudit dispositif provoquant une interruption de continuité par effet mécanique d'au moins une portion dudit circuit électronique de sécurité, caractérisé en ce que le support (1) est souple, des moyens de collage (10,11,12) étant prévus sur au moins une face dudit support afin de sceller ou marquer ledit objet.

2. Dispositif de scellement selon la revendication 1, caractérisé en ce que ledit circuit électronique de sécurité est passif et ne comporte aucune source d'énergie.

3. Dispositif de scellement selon l'une des revendications 1 ou 2, caractérisé en ce que ledit circuit électronique de sécurité est constitué d'un composant électronique programmable (20) relié par au moins un fil de connexion (22) à un bobinage de fil fin (23).

4. Dispositif de scellement selon la revendication 3, caractérisé en ce que le composant électronique est apte à recevoir un code programmé en usine.

5. Dispositif de scellement selon la revendication 3, caractérisé en ce que le composant électronique est apte à recevoir un code programmable par l'utilisateur.

6. Dispositif de scellement selon l'une des revendications 4 ou 5, caractérisé en ce que après programmation du code, ledit code est verrouillé.

7. Dispositif de scellement selon l'une des revendications précédentes, caractérisé en ce que ledit circuit de sécurité est apte à être activé et interrogé par des moyens électroniques extérieurs, le bobinage faisant alors office d'antenne, une interruption de continuité dudit circuit empêchant la transmission du code.

8. Dispositif de scellement selon l'une des revendications précédentes, caractérisé en ce qu'il comporte des moyens de collage (10,11,12) tels que au moins un des éléments du circuit électronique de sécurité constitué par le bobinage, les fils de liaison et le composant électronique, adhère fortement sur au moins deux parties mobiles entre elles (11,12;32,33) du support (1), ou de l'objet sur lesquelles il est appliqué pour scellement ou marquage.

9. Dispositif de scellement selon la revendication 8, caractérisé en ce que le support (1) possède des moyens collants différenciés (10,11,12) tels que l'adhésion de un ou de deux des éléments constitués par le bobinage, les fils de liaison et le composant électronique, sur les parties de support (1) auxquels ils sont collés d'origine, est inférieure à l'adhésion de cet élément ou de ces deux éléments sur les parties de support (1) ou de l'objet sur lesquels ils sont appliqués pour scellement.

10. Dispositif de scellernent selon l'une des revendications 8 ou 9, caractérisé en ce que le support (1) est disposé de manière à entourer deux parties (30,31) d'un récipient (3), les deux dites parties de récipient étant mobiles entre elles, une partie du support (11) étant collée sur une autre partie du support (12), une interruption de continuité du circuit de sécurité étant provoquée par un déplacement de l'une desdites parties du récipient par rapport à l'autre et/ou un arrachage ou décollage de l'une des parties du support.

11. Dispositif de scellement selon l'une des revendications 8 ou 9, caractérisé en ce que le support (1) est disposé de manière à entourer une partie en forme de boucle fermée d'un objet, une partie du support (11) étant collée sur une autre partie du support (12), une interruption de continuité du circuit de sécurité étant provoquée par un arrachage ou décollage de l'une des parties du support.

12. Dispositif de scellement selon l'une des revendications 8 ou 9, caractérisé en ce qu'une partie du support (11) est prévue pour être collée sur une première partie (32) d'un récipient, une autre partie du support (12) étant prévue pour être collée sur une deuxième partie (33) du récipient, les deux dites parties de récipient étant mobiles entre elles, une interruption de continuité du circuit de sécurité étant provoquée par un déplacement de l'une desdites parties du récipient par rapport à l'autre et/ou un arrachage ou décollage de l'une des parties du support.

13. Dispositif de scellement selon l'une des revendications 8 ou 9, caractérisé en ce que le support est prévu pour être collé sur un objet, une interruption de continuité du circuit de sécurité étant provoquée par un arrachage ou décollage de l'une des parties du support.

14. Dispositif de scellement selon l'une des revendications 8 à 13, caractérisé en ce que le circuit de sécurité est agencé de telle manière qu'une coupure d'au moins une portion du fil fin de connexion et/ou constituant une ou plusieurs spires du bobinage provoque l'interruption de continuité dudit circuit de sécurité.

15. Dispositif de scellement selon la revendication 14, caractérisé en ce que au moins une portion du fil fin de connexion et/ou constituant une ou plusieurs spires du bobinage comporte au moins une amorce de rupture.

16. Utilisation du dispositif de scellement selon l'une des revendications précédentes pour le scellement d'un récipient.

17. Utilisation du dispositif de scellement selon l'une des revendications précédentes pour le marquage d'un objet.

## Patentansprüche

1. Sicherheits-Verschliessvorrichtung, bestimmt zur Anwendung an einem zu verschliessenden oder zu markierenden Gegenstand, gebildet aus einem Tragelement (1), auf welchem ein elektronischer Sicherheitsschaltkreis (2) angeordnet wird, durch welchen die Unversehrtheit des Verschlusses durch elektronische Mittel auf elektromagnetischem Weg kontrolliert werden kann, wobei die Entsiegelung der genannten Vorrichtung einen Unterbruch des Durchganges durch mechanische Wirkung mindestens eines Teils des genannten elektronischen Sicherheitsschaltkreises bewirkt, dadurch gekennzeichnet, dass das Tragelement (1) biegsam ist, wobei Klebemittel (10, 11, 12) auf mindestens einer Fläche des genannten Tragelementes vorgesehen werden, um den genannten Gegenstand zu verschliessen oder zu markieren.

2. Verschliessvorrichtung nach Anspruch 1, dadurch gekennzeichnet, dass der genannte elektronische Sicherheitsschaltkreis passiv ist und keine Energiequelle enthält.

3. Verschliessvorrichtung nach einem der Ansprüche 1 oder 2, dadurch gekennzeichnet, dass der genannte elektronische Sicherheitsschaltkreis aus einem elektronischen, programmierbaren Bauelement (20) gebildet wird, welches durch mindestens einen Verbindungsdraht (22) mit einer Feindraht-Wicklung (23) verbunden wird.

4. Verschliessvorrichtung nach Anspruch 3, dadurch gekennzeichnet, dass das elektronische Bauelement geeignet ist, einen im Werk programmierten Code aufzunehmen.

5. Verschliessvorrichtung nach Anspruch 3, dadurch gekennzeichnet, dass das elektronische Bauelement geeignet ist, einen durch den Benutzer programmierbaren Code aufzunehmen.

6. Verschliessvorrichtung nach einem der Ansprüche 4 oder 5, dadurch gekennzeichnet, dass nach der Programmierung des Codes dieser Code gegen Veränderungen gesperrt ist.

7. Verschliessvorrichtung nach einem der vorangehenden Ansprüche, dadurch gekennzeichnet, dass der genannte Sicherheitsschaltkreis geeignet ist, durch äussere elektronische Mittel aktiviert und abgefragt zu werden, wobei dann die Wicklung als Antenne dient und ein Unterbruch des Durchganges des genannten Schaltkreises die Uebertragung des Codes verhindert.

8. Verschliessvorrichtung nach einem der vorangehenden Ansprüche, dadurch gekennzeichnet, dass sie derartige Klebemittel (10, 11, 12) enthält, dass mindestens eines der Elemente des elektronischen Sicherheitsschaltkreises, welcher durch die Wicklung, die Verbindungsdrähte und das elektronische Bauelement gebildet wird, auf mindestens zwei zueinander beweglichen Teilen (11, 12; 32, 33) des Tragelementes (1) oder des Gegenstandes fest haftet, auf welchen es zwecks Verschliessen oder Markierung angebracht wird.

9. Verschliessvorrichtung nach Anspruch 8, dadurch gekennzeichnet, dass das Tragelement (1) derart unterschiedliche Klebemittel (10, 11, 12) aufweist, dass das Haftvermögen von einem oder zwei der die Wicklung, die Verbindungsdrähte und das elektronische Bauelement bildenden Elemente auf denjenigen Teilen des Tragelementes (1), auf welche sie ursprünglich geklebt wurden, geringer ist als das Haftvermögen dieses Elementes oder dieser beiden Elemente auf denjenigen Teilen des Tragelementes (1) oder des Gegenstandes, auf welchen sie zwecks Verschliessen angebracht werden.

10. Verschliessvorrichtung nach einem der Ansprüche 8 oder 9, dadurch gekennzeichnet, dass das Tragelement (1) derart angeordnet wird, dass zwei Teile (30, 31) eines Behälters (3) umgeben werden, wobei die beiden genannten Behälterteile zueinander beweglich sind, ein Teil (11) des Tragelementes auf einen anderen Teil (12) des Tragelementes geklebt wird und ein Unterbruch des Durchganges des Sicherheitsschaltkreises bewirkt wird durch eine Verschiebung des einen der genannten Teile des Behälters relativ zum anderen und/oder durch ein Losreissen oder Loslösen des einen der Teile des Tragelementes.

11. Verschliessvorrichtung nach einem der Ansprüche 8 oder 9, dadurch gekennzeichnet, dass das Tragelement (1) derart angeordnet wird, dass es einen Teil eines Gegenstandes in Form einer geschlossenen Schlaufe umgibt, wobei ein Teil (11) des Tragelementes auf einen anderen Teil (12) des Tragelementes geklebt wird und ein Unterbruch des Durchganges des Sicherheitsschaltkreises bewirkt wird durch ein Losreissen oder Loslösen des einen der Teile des Tragelementes.

12. Verschliessvorrichtung nach einem der Ansprüche 8 oder 9, dadurch gekennzeichnet, dass ein Teil (11) des Tragelementes dafür vorgesehen wird, auf einen ersten Teil (32) eines Behälters geklebt zu werden, wobei ein anderer Teil (12) des Tragelementes dafür vorgesehen wird, auf einen zweiten Teil (33) des Behälters geklebt zu werden, die beiden genannten Behälterteile zueinander beweglich sind und ein Unterbruch des Durchganges des Sicherheitsschaltkreises bewirkt wird durch eine Verschiebung des einen der genannten Teile des Behälters relativ zum anderen und/oder durch ein Losreissen oder Loslösen des einen der Teile des Tragelementes.

13. Verschliessvorrichtung nach einem der Ansprüche 8 oder 9, dadurch gekennzeichnet, dass das Tragelement dafür vorgesehen wird, auf einen Gegenstand geklebt zu werden, wobei ein Unterbruch des Durchganges des Sicherheitsschaltkreises bewirkt wird durch ein Losreissen oder Loslösen des einen der Teile des Tragelementes.

14. Verschliessvorrichtung nach einem der Ansprüche 8 bis 13, dadurch gekennzeichnet, dass der Sicherheitsschaltkreis derart angeordnet wird, dass eine Trennung von mindestens einem Abschnitt des Feindrahtes zur Verbindung und/oder zur Bildung einer oder mehrerer Windungen der Wicklung den Unterbruch des Durchganges des genannten Sicherheitsschaltkreises bewirkt.

15. Verschliessvorrichtung nach Anspruch 14, dadurch gekennzeichnet, dass mindestens ein Abschnitt des Feindrahtes zur Verbindung und /oder zur Bildung einer oder mehrerer Windungen der Wicklung mindestens einen Bruchansatz enthält.

16. Verwendung der Verschliessvorrichtung nach einem der vorangehenden Ansprüche zum Verschliessen eines Behälters.

17. Verwendung der Verschliessvorrichtung nach einem der vorangehenden Ansprüche zur Markierung eines Gegenstandes.

## Claims

1. A safety sealing device intended to be applied to an object to be sealed or marked, comprising a support (1) on which is disposed an electronic safety circuit (2) by which the integrity of the sealing can be checked by electronic means electromagnetically, the unsealing of said device causing a break in continuity by mechanical effect of at least one portion of said electronic safety circuit characterized in that the support (1) is flexible.

2. Safety sealing device according to claim 1, characterized in that said electronic safety circuit is passive and does not include any power source.

3. Sealing device according one of the claims 1 or 2, characterized in that said electronic safety circuit is made up of a programmable electronic component (20) connected by at least one connection wire (22) to a winding of fine wire (23).

4. Sealing device according to claim 3, characterized in that the electronic component is capable of receiving a fixed code programmed at the factory.

5. Sealing deviced according to claim 3, characterized in that the electronic component is capable of receiving a code programmable by the user.

6. Sealing device according to one of the claims 4 or 5, characterized in that after programming of the code, said code is locked.

7. Sealing device according to one of the preceding claims, characterized in that said safety circuit is able to be activated and interrogated by outside electronic means, the winding then acting as an antenna, a break in continuity of said circuit preventing transmission of the code.

8. Sealing device according to one of the preceding claims, characterized in that it comprises gluing means (10, 11, 12) such that at least one of the elements of the electronic safety circuit composed of the winding, the connection wires, and the electronic component adheres strongly to at least two intermovable parts (11, 12; 32, 33) of the support (1), or of the object to which it is applied for sealing or marking.

9. Sealing device according to claim 8, characterized in that the support possesses differentiated adhesive means (10, 11, 12) such that the adhesion of one or of two of the elements constituted by the winding, the connection wires, and the electronic components, to the support parts to which they are originally glued, is less than the adhesion of this element or of these two elements to the parts of support (1) or of the object parts to which they are applied for sealing.

10. Sealing device according to one of the claims 8 or 9, characterized in that the support is disposed in a manner to encircle two parts (30, 31) of a recipient (3), the two said recipient parts being intermovable, one part of the support (11) being glued to another part of the support (12), a break in continuity of the safety circuit being caused by a displacement of one of said parts of the recipient relative to the other and/or a tearing or ungluing of one of the parts of the support.

11. Sealing device according to one of the claims 8 or 9, characterized in that the support (1) is disposed in a manner to encircle a closed-loop-shaped part of an object, one part of the support (11) being glued to another part of the support (12), a break in continuity of the safety circuit being caused by a tearing or ungluing of one of the parts of the support.

12. Sealing device according to one of the claims 8 or 9, characterized in that one part of the support (11) is provided to be glued to a first part (32) of a recipient, another part of the support (12) being provided to be glued to a second part (33) of the recipient, the two said recipient parts being intermovable, a break in continuity of the safety circuit being caused by a displacement of one of said parts of the recipient relative to the other and/or a tearing or ungluing of one of the parts of the support.

13. Sealing device according to one of the claims 8 or 9, characterized in that the support is provided to be glued to an object, a break in continuity of the safety circuit being caused by a tearing or ungluing of one of the parts of the support.

14. Sealing device according to one of the claims 8 to 13, characterized in that the safety circuit is arranged in such a way that a cut of one portion of the fine connection wire and/or wire constituting one or more turns of the winding causes the break in continuity of the said safety circuit.

15. Sealing device according to claim 14, characterized in that at least one portion of the fine connection wire and/or wire constituting one or more turns of the winding comprises at least one beginning of a break.

16. Use of the sealing device according to one of the preceding claims for the sealing of a recipient.

17. Use of the sealing device according to one of the preceding claims for the marking of an object.
